# EUROPÄISCHE PATENTSCHRIFT

(11) **EP 0 766 234 B1**
(45) Veröffentlichungstag und Bekanntmachung des Hinweises auf die Patenterteilung: **14.05.2003**
(21) Anmeldenummer: 96115199.0
(22) Anmeldetag: 21.09.1996
(51) Int. Cl.: G11B 7/09

(54) **Wiedergabe- und/oder Aufzeichnungsgerät für optische Aufzeichnungsträger unterschiedlicher Speicherdichte**
Reproducing and/or recording apparatus for an optical record carrier having different recording densities
Appareil de reproduction et/ou d'enregistrement pour support d'enregistrement optique avec différentes densités d'écriture

(30) Priorität: 29.09.1995 DE 19536396
(43) Veröffentlichungstag der Anmeldung: 02.04.1997
(73) Patentinhaber: DEUTSCHE THOMSON-BRANDT GMBH, 78048 Villingen-Schwenningen (DE)
(72) Erfinder: Zucker, Friedhelm, 78052 Villingen-Schwenningen (DE)
(74) Vertreter: Wördemann, Hermes, Dipl.-Ing.

(56) Entgegenhaltungen:
- EP-A- 0 525 896
- EP-A- 0 536 718
- EP-A- 0 646 909
- EP-A- 0 749 118
- JP-A- 7 065 394

## Beschreibung

Die Erfindung betrifft Wiedergabe- und/oder Aufzeichnungsgeräte für optische Aufzeichnungsträger unterschiedlicher Speicherdichte zur Informationswiedergabe von und/oder Aufzeichnung auf unterschiedliche Informationsspeicherdichte aufweisende optische Aufzeichnungsträger. Das Wiedergabe- und/oder Aufzeichnungsgerät ermöglicht sowohl die Informationswiedergabe von und/oder das Aufzeichnen auf bisher üblichen optischen Aufzeichnungsträgern in Form der standardisierten Audio CD, Minidisk oder MOD als auch von und/oder auf optische Aufzeichnungsträger, die eine vergleichsweise höhere Informationsspeicherdichte, wie beispielsweise eine Digitale Videodisk oder Super Density Disc aufweisen. Aufzeichnungsträger vergleichbar höherer Speicherdichte weisen dann meist geringere Spurabstände und geringere Ausdehnungen der Pits bzw. Speicherstrukturen auf.

Informationen sind auf der CD bzw. Compact Disc in digitaler Form als Spiralspur aufeinanderfolgender Vertiefungen, den sogenannten Pits, aufgezeichnet. Der Spurabstand optischer Aufzeichnungsträger gegenwärtiger Norm beträgt 1,6 µm und die Pits weisen eine Breite von 0,6 µm sowie eine Tiefe von 0,12 µm auf und die Länge eines Pits oder der Abstand zwischen zwei Pits variiert im Bereich zwischen 0,9 und 3,3 µm, vgl. Philips tech. Rev.40, 1982, No.6, S.156. Diese Standardwerte sind auch für die Minidisk zutreffend. Das höhere Speichervermögen der Minidisk wird nicht durch eine höhere Speicherdichte des Aufzeichnungsträgers sondern durch das Komprimieren der Informationen vor der Aufzeichnung erreicht. Die Minidisk stimmt hinsichtlich des Aufbaus des Aufzeichnungsträgers mit den CD-Standardwerten überein, so daß sich entsprechende Abspielgeräte hinsichtlich des verwendeten Lasers und der Abtasteinrichtung nicht unterscheiden. Der Datenkompression ohne Informationsverlust sind jedoch natürliche Grenzen gesetzt, so daß man bestrebt ist, die Speicherkapazität des Aufzeichnungsträgers zu erhöhen. Dies bedingt jedoch einen geringeren Spurabstand und/oder Pits mit geringeren Abmessungen. Folglich sind auch Abspielgeräte neuen Typs erforderlich, die das optische Abtasten und die Informationswiedergabe von Aufzeichnungsträgern größerer Speicherdichte ermöglichen. Zum optischen Abtasten und/oder Aufzeichnen von Pits geringerer Abmessungen und mit geringerem Spurabstand ist es notwendig, den Laserstrahl auf der CD mit geringerer Lichtfleckgröße zu fokussieren. Dabei wird die Größe des Lichtfleckes sowohl von der numerischen Apertur der Objektivlinse als auch von der Wellenlänge des Laserlichtes bestimmt. Gegenwärtige verwendete Laser weisen eine Wellenlänge von 780 nm auf. Es sind jedoch bereits Laser bekannt, die Licht mit einer Wellenlänge von nur 635 nm bereitstellen. Ein quantitativer Sprung wird von optischen Frequenzverdopplern, sogenannten Second Harmonic Generator Crystals, erwartet. Sie ermöglichen eine Halbierung der Wellenlänge. Der dabei auftretende Leistungsverlust kann durch eine höhere Laserleistung ausgeglichen werden.
Die Verwendung eines kleineren Lichtfleckes bzw. einer Lichtquelle geringere Wellenlänge zur Abtastung optischer Aufzeichnungsträger würde jedoch dazu führen, daß mit derartigen Geräten Aufzeichnungsträger gegenwärtiger CD-Norm nicht abspielbar sind. Grund dafür ist das zur Abtastung verwendete Prinzip der destruktiven Interferenz. Das Prinzip der destruktiven Interferenz besteht darin, daß eine optische Abtastung der Pits, die lediglich von Vertiefungen einer gleichmäßig reflektierenden Schicht gebildet werden, dadurch erreicht wird, daß der abtastende Lichtfleck derart fokussiert wird, daß der außerhalb eines Pits reflektierte Lichtanteil annähernd gleich dem von der Vertiefung reflektierten Lichtanteil ist und die Lichtanteile sich durch destruktive Interferenz auslöschen, so daß eine Abschwächung der Intensität als Abtastsignal ausgewertet werden kann. Es besteht ein zwischen Pit- bzw. Speicherstrukturgröße und Lichtfleckgröße einzuhaltendes Abhängigkeitsverhältnis.
Dies ist teilweise auch für einen magneto-optischen Aufzeichnungsträger, der sogenannten MOD, zutreffend, bei dem die Informationsspeicherung bzw. -wiedergabe im wesentlichen auf dem Drehen der Polarisationsrichung des Lichtes beruht. Obwohl das Verhältnis zwischen der Größe magnetischer Domänen und der Lichtfleckgröße nicht mit der für Pits zutreffenden Genauigkeit eingehalten werden muß, ist auch hier bei Aufzeichnungsträgern unterschiedlicher Speicherdichte, insbesondere hinsichtlich Aufzeichnungsträger mit verringertem Spurabstand, ein gewisses Abhängigkeitsverhältnis zu berücksichtigen.

Zum Abtasten optischer Aufzeichnungsträger unterschiedlicher Speicherdichte ist es bereits bekannt, eine umschaltbare Spurführung vorzusehen, die den die Informationsspur abtastenden Lichtstrahl dem Speicherdichtetyp entsprechend auf der Mitte oder dem Rand der Informationsspur führt, vgl. EP-A-0 525 896.

Die Merkmale des Oberbegriffs von Anspruch 1 sind aus JP-A-07 065 394 bekannt.

Es ist deshalb Aufgabe der Erfindung, ein Wiedergabe- und/oder Aufzeichnungsgerät für optische Aufzeichnungsträger unterschiedlicher Speicherdichte zu schaffen.

Diese Aufgabe wird mit den im unabhängigen Anspruch 1 angegebenen Merkmalen gelöst. Vorteilhafte Weiterbildungen sind in abhängigen Ansprüchen angegeben.

Es wird ein Wiedergabe- und/oder Aufzeichnungsgerät für optische Aufzeichnungsträger angegeben, das es in nur einem Gerät ermöglicht, sowohl Aufzeichnungsträger mit einer der gegenwärtigen Norm entsprechenden Speicherdichte als auch Aufzeichnungsträger höherer Speicherdichte zu verwenden. Dies wird mit einem Wiedergabe- und/oder Aufzeichnungsgerät erreicht, das eine Abtasteinrichtung aufweist, deren Detektoren zum Erzeugen der für den Speicherdichtetyp des Aufzeichnungsträgers erforderlichen Steuer- und Regelsignale im Wiedergabe- und/oder Aufzeichnungsgerät in unterschiedlicher Kombination zusammengeschaltet werden. Um beispielsweise im gleichen Gerät sowohl eine Digitale Video Disk hoher Speicherdichte als auch eine übliche Audio CD mit geringer Speicherdichte abspielen zu können, wird ein aus sechs Einzeldetektoren bzw. Photoelementen bestehendes Detektorsystem verwendet, wobei die Photodetektoren dem Speicherdichtetyp des Aufzeichnungsträgers entsprechend zusammengeschaltet werden. Mit nur einer Detektoranordnung werden dann unterschiedliche Spurführungssysteme mit einer umschaltbaren Spurführungssignal-Erzeugungseinrichtung realisiert. Im genannten Beispiel werden mit nur einem Detektorsystem sowohl das zur Spurführung einer Digitalen Video Disk verwendete Differential Push-Pull als auch das zur Spurführung einer Audio CD verwendete Standard Dreihstrahlsystem verwirklicht. Hierzu sind in der Spurführungssignal-Erzeugungseinrichtung entsprechende Schaltungsanordnungen zur Spurfehlererzeugung vorgesehen, die dem Speicherdichtetyp des Aufzeichnungsträgers entsprechend mit dem Spurregelkreis verbunden werden. Dadurch können mit nur einem Detektorsystem in vorteilhafter Weise Aufzeichnungsträger unterschiedlicher Speicherdichte in einem Gerät verwendet werden. Die Anpassung des Gerätes an den Speicherdichtetyp des Aufzeichnungsträgers erfolgt mit einem Umschalter, mit dem die erforderliche Schaltungsanordnung zur Spurfehlersignalerzeugung ausgewählt wird. Obwohl eine an den Speicherdichtetyp des Aufzeichnungsträgers anzupassende Lichtfleckgröße bzw. unterschiedliche Lichtfleckgrößen zur Abtastung des Aufzeichnungsträgers erforderlich sind, ist nur eine Detektoranordnung erforderlich. Um dennoch für den Speicherdichtetyp erforderliche Spurführungssignale bereitzuhalten, ist die umschaltbare Spurführungssignal-Erzeugungseinrichtung vorgesehen.
Das zwischen der Speicherelementgröße und der Lichtfleckgröße bestehende Abhängigkeitsverhältnis wird mit einer Doppelfokuslinse bzw. Mehrfachfokuslinse als Objektivlinse auch bei unterschiedlicher Größe der Speicherelemente bzw. Pits eingehalten. Der Abstand zwischen den Hilfsstrahlen wird von der Fokussierung nur unwesentlich beeinflußt, so daß die beim Dreistrahlverfahren auf den Rand der Pits ausgerichteten Hilfsstrahlen bei geringerem Spurabstand des Aufzeichnungsträgers höherer Speicherdichte nicht auf dem Rand der Pits sondern zwischen den Pits den Aufzeichnungsträger abtasten. Da sich die geometrische Lage der Abtastlichtflecke zueinander trotz unterschiedlicher Lichtfleckgröße nur unwesentlich verändert, kann in vorteilhafter Weise eine Detektoranordnung für unterschiedliche Lichtfleckgrößen bzw. Aufzeichnungsträger unterschiedlicher Speicherdichte verwendet werden.

Das unterschiedliche Auftreffen der Hilfslichtflecke - auf dem Rand der Pits oder zwischen den Pits - erfordert eine spezielle Art der Spurführungssignal- bzw. Spurfehlersignalerzeugung, die jedoch vorteilhaft mit einer entsprechend umschaltbaren elektronischen Schaltung, die von der Spurführungssignal-Erzeugungseinrichtung gebildet wird, realisiert wird.
Es werden weder ein Licht einer anderen Wellenlänge bereitstellender Laser noch ein anders Abtastsystem verwendet.

Es sind somit in vorteilhafter Weise kompatible Wiedergabeund/oder Aufzeichnungsgeräte herstellbar, die zum Betrieb mit Aufzeichnungsträgern unterschiedlicher Speicherdichte geeignet sind.

Nachfolgend wird die Erfindung anhand eines Ausführungsbeispiels in Zeichnungen näher erläutert.

Es zeigen:
- Fig.1: Prinzipskizze der Photodetektoranordnung und Spurführungssignal-Erzeugungseinrichtung eines Wiedergabe- und/oder Aufzeichnungsgerätes für Aufzeichnungsträger unterschiedlicher Speicherdichte,
- Fig.2: Prinzipskizze zu Lichtfleckabbildungen beim Abtasten hoher Speicherdichte,
- Fig.3: Prinzipskizze zu Lichtfleckabbildungen beim Abtasten hoher Speicherdichte,
- Fig.4: Prinzipskizze einer Schaltungsanordnung zur Spurfehlersignalerzeugung,
- Fig.5: Prinzipskizze einer Schaltungsanordnung zur Fokusfehlersignalerzeugung und
- Fig.6: Prinzipskizze einer Abtasteinrichtung eines Wiedergabe- und/oder Aufzeichnungsgerätes für Aufzeichnungsträger unterschiedlicher Speicherdichte.

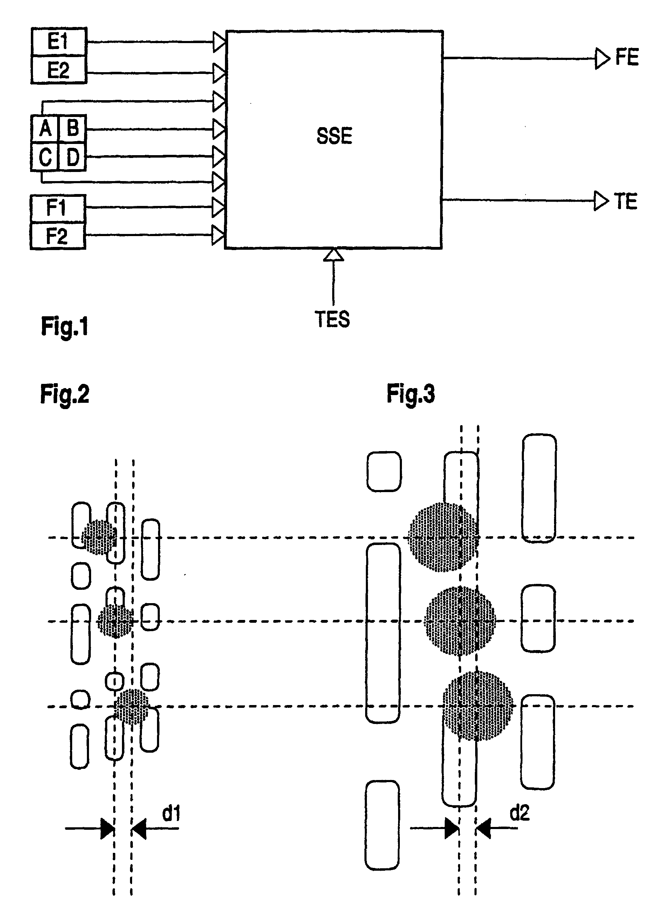

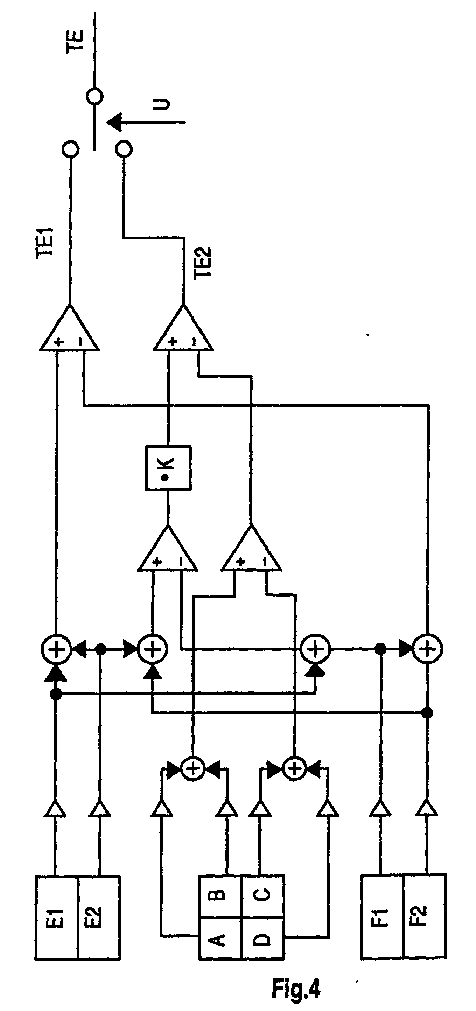

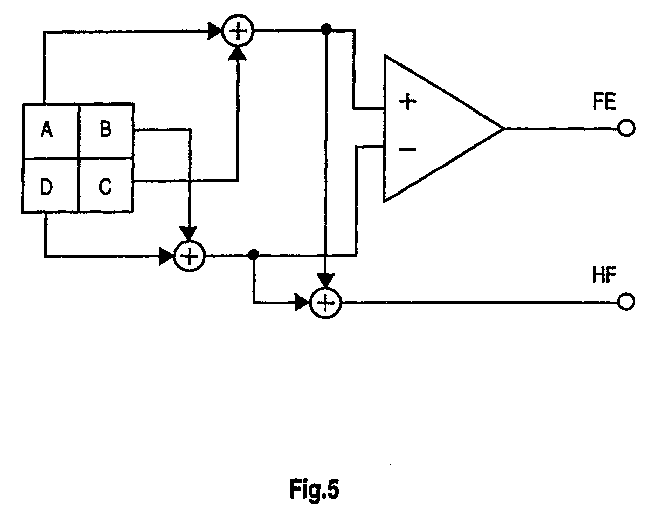

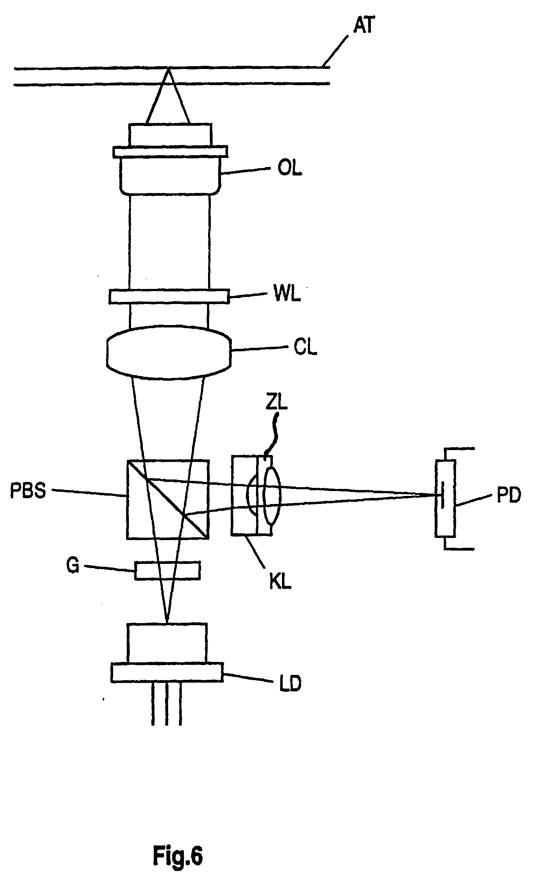

Gemäß der in Fig.6 dargestellten Prinzipskizze eines Wiedergabe- und/oder Aufzeichnungsgerätes für optische Aufzeichnungsträger AT unterschiedlicher Speicherdichte ist in einem Wiedergabe- und/oder Aufzeichnungsgerät, das sowohl zum Abspielen von Audio-CDs als auch zum Abspielen von digitalen Video-Discs vorgesehen ist, eine Abtasteinrichtung verwendet, die Fig.6 entsprechend aus einer Laserdiode LD, einem Gitter G, einem Polarisationsstrahlteiler PBS, einer Collimatorlinse CL, einer Viertelwellenlängeplatte WL, einer Objektivlinse OL, einer Konkavlinse KL, einer Zylinderlinse ZL und einem Detektor PD besteht. Obwohl die digitale Video-Disc, nachfolgend DVD und eine Audio-Disc, nachfolgend CD genannt, eine unterschiedliche Speicherdichte aufweisen, kann die in Fig.6 dargestellte Abtasteinheit für beide Arten von Aufzeichnungsträgern AT gleichermaßen verwendet werden. Die höhere Speicherdichte bei einer DVD wird durch eine geringere Pitgröße und einem verringerten Spurabstand im Vergleich zur CD erreicht. In den Figuren 2 und 3 ist eine entsprechende Gegenüberstellung dargestellt. Um die auf einem Aufzeichnungsträger AT gespeicherten Informationen wiederzugeben oder entsprechende Informationen aufzuzeichnen ist es erforderlich, den Durchmesser des Abtaststrahls bzw. Schreibstrahls an die Größe der verwendeten Speicherelemente bzw. Pits anzupassen. Damit sowohl die kleineren Pits einer DVD als auch die größeren Pits einer CD mit der in Fig.6 angegebenen Abtasteinrichtung gelesen werden können, ist die Objektivlinse OL als Doppelfokuslinse ausgebildet. Mit der Doppelfokuslinse oder auch einer Mehrfachfokuslinse können unterschiedliche Lichtfleckdurchmesser auf dem Informationsträger AT realisiert werden. Trotz der unterschiedlichen Lichtfleckdurchmesser wird die Lage der mit dem in Fig.6 dargestellten Gitter G erzeugten Hilfsstrahlen zum Hauptstrahl sowie untereinander nur geringfügig verändert. Die in Fig.2 und Fig.3 angegebenen Abstände d1, d2 des Hilfslichtflecks zum Hauptlichtfleck sind annähernd gleich. Dadurch kann in vorteilhafter Weise trotz unterschiedlicher Lichtfleckdurchmesser ein Detektor PD verwendet werden, der aus einer in Fig.1 dargestellten Anordnung von Photodetektoren besteht. Fig.1 entsprechend sind zur Hauptstrahldetektion ein Vierquadrantendetektor mit den Photoelementen A, B, C, D sowie zwei geteilte Hilfsstrahldetektoren mit den Photoelementen E1, E2 bzw. F1, F2 vorgesehen. Dieser Detektoranordnung wird in vorteilhafter Weise sowohl für Aufzeichnungsträger AT hoher Speicherdichte als auch geringer Speicherdichte verwendet. Wie aus den Figuren 2 und 3 ersichtlich, treffen die Hilfsstrahlen bei einer CD auf dem Rand der Pits und bei einer DVD zwischen den Pits auf dem Aufzeichnungsträger AT auf. Die unterschiedliche Lage der Hilfsstrahlen zu den Pits erfordert das Verwenden unterschiedlicher Verfahren zu Spurführung. Während das Fokusfehlersignal FE entsprechend der Gleichung FE=(A+C) - (B+D) für Aufzeichnungsträger AT unterschiedlicher Speicherdichte gleichermaßen verwendet werden kann, muß das Spurfehlersignal TE dem Speicherdichtetyp entsprechend gebildet werden. Zur Spurführung eines Aufzeichnungsträgers AT geringer Speicherdichte wird das Spurfehlersignal TE entsprechend der Gleichung TE=(E1+E2) - (F1+F2) gebildet. Für den Aufzeichnungsträger höherer Speicherdichte ist das Spurfehlersignal TE jedoch gemäß der Gleichung TE=(A+B) - (C+D) --k* ((E1+F1) - (E2+F2)) zu bilden. Hierzu ist eine Spurführsignal-Erzeugungseinrichtung SSE vorgesehen, die Fig.1 entsprechend mit den Photodetektoren A, B, C, D, E1, E2, F1, F2 verbunden ist. Die in vorstehenden Gleichungen angegebenen Verknüpfungen werden mit den in Fig.4 und Fig.5 angegebenen Schaltungsanordnungen realisiert. Um Aufzeichnungsträger AT unterschiedlicher Speicherdichte mit nur einer Abtasteinrichtung abtasten zu können, wird die dem Speicherdichtetyp entsprechende Schaltungsanordnung zur Spurfehlersignalerzeugung TE1 bzw. TE2 über einen Umschalter U mit dem Spurregelkreis verbunden. Hierzu wird der Spurführungssignal-Erzeugungseinrichtung SSE ein Umschaltsignal TES zugeführt. Das Umschaltsignal kann entweder manuell eingegeben oder mit einer Schaltungsanordnung zur Speicherdichtetyperkennung erzeugt werden.

Die Anwendung der Erfindung ist nicht auf die hier angegebenen Ausführungen beschränkt sondern generell bei optischen Informationsträgern auf der Basis des angegebenen Prinzips möglich.

## Patentansprüche

1. Wiedergabe- und/oder Aufzeichnungsgerät für optische Aufzeichnungsträger unterschiedlicher Speicherdichte, mit einer Photodetektoranordnung, die mit einer dem Speicherdichtetyp des optischen Aufzeichnungsträgers entsprechend umschaltbaren Spurführungssignal-Erzeugungseinrichtung verbunden ist, und **daß** an der Photodetektoranordnung eine Spurführsignal-Erzeugungseinrichtung (SSE) angeschlossen ist, die zur Spurführung eines optischen Aufzeichnungsträgers (AT) geringer Speicherdichte ein Spurfehlersignal (TE) entsprechend der Gleichung TE=(E1+E2) - (F1+F2) mit einem Dreistrahlsystem erzeugt, das einen Hauptstahl zum Auslesen von Daten und zwei Hilfsstrahlen zur Spurnachführung verwendet, daß **dadurch gekennzeichnet,** für Aufzeichnungsträger (AT) höherer Speicherdichte ein Spurfehlersignal (TE) entsprechend der Gleichung TE= (A+B) - (C+D) -k* ((E1+F1) - (E2+F2)) mit einem Differential-Push-Pull-System bereitstellt wird, das mit Teilflächen von Hilfsstrahldetektoren gebildet ist, deren Signale zur Offsetkompensation zunächst addiert und anschließend subtrahiert werden, wobei E1,E2 beziehungsweise F1 und F2 dei Teilflächen der beiden Hilfsstrahldetektoren und A,B,C und D dei Teilflächen eines Vierquadrantenhauptstahldetektors sind, sowei k in Korrekturfaktor ist.

2. Wiedergabe- und/oder Aufzeichnungsgerät nach Anspruch 1, **dadurch gekennzeichnet, daß** in der Photodetektoranordnung auftretende Intensitätsunterschiede zwischen den Signalen, die von Hilfsstrahldetektoren (E1, E2 bzw. F1, F2) und vom Vierquadrantendetektor (A, B, C, D) erzeugt werden, mit dem in der Spurführsignal-Erzeugungseinrichtung (SSE) eingestellten Korrekturfaktor k korrigiert werden.

3. Wiedergabe- und/oder Aufzeichnungsgerät nach Anspruch 1, **dadurch gekennzeichnet, daß** ein Mittel zum Anpassen der Lichtfleckgröße auf dem Aufzeichnungsträger (AT) entsprechend der Speicherdichte bzw. Größe der Speicherelemente des Aufzeichnungsträgers (AT) vorgesehen ist.

4. Wiedergabe- und/oder Aufzeichnungsgerät nach Anspruch 3, **dadurch gekennzeichnet, daß** das Mittel zum Anpassen der Lichtfleckgröße auf dem Aufzeichnungsträger (AT) eine als Doppelfokuslinse bzw. Mehrfachfokuslinse ausgebildete Objektivlinse (OL) ist.

5. Wiedergabe- und/oder Aufzeichnungsgerät nach einem der Ansprüche 1 bis 4, **dadurch gekennzeichnet, daß** die Spurführungssignal-Erzeugungseinrichtung (SSE) eine Schaltungsanordnung zur Spurfehlersignalerzeugung (TE) ist, die dem Speicherdichtetyp des optischen Aufzeichnungsträgers (AT) entsprechend, mit dem Spurregelkreises über einen Umschalter (U)verbunden ist.

6. Wiedergabe- und/oder Aufzeichnungsgerät nach einem der Ansprüche 1 bis 5, **dadurch gekennzeichnet, daß** die Spurführungssignal-Erzeugungseinrichtung (SSE) mit einem dem Speicherdichtetyp entsprechenden Signal umgeschaltet wird, das während des Fokussuchvorganges ermittelt wird.

## Claims

1. Reproduction and/or recording device for optical recording media of varying storage density including a photodetector arrangement being connected to a track guidance signal generating device which can be changed over according to the storage density type of the optical recording medium, wherein a track guidance signal generating device (SSE) is connected to the photodetector arrangement generating a track error signal (TE) according to the equation TE = (E1 + E2) - (F1 + F2) for track guidance of an optical recording medium (AT) of low storage density including a three beam system using a main beam for reading of data and two auxiliary beams for track guidance,
**characterized in that**
for recording media (AT) of higher storage density a track error signal (TE) is provided according to the equation TE = (A + B) - (C + D) -k* ((E1 + F1) - (E2 + F2)) including a differential push-pull-system which is formed by partial areas of auxiliary beam detectors the signals of which are first added and subsequently subtracted for purpose of offset compensation wherein E1, E2 and F1 and F2, respectively, are the partial areas of the two auxiliary beam detectors and A, B, C and D are the partial areas of a four-quadrant main beam detector and K is a correction factor.

2. Reproduction and/or recording device according to claim 1, **characterized in that** intensity differences occurring within the photodetector arrangement between the signals generated by auxiliary beam detectors (E1, E2 and F1, F2, respectively,) and by the four-quadrant detector (A, B, C, D) are corrected by means of the correction factor k adjusted within the track guidance signal generating device (SSE).

3. Reproduction and/or recording device according to claim 1, **characterized in that** a means is provided for adapting the light spot size on the recording medium (AT) according to the storage density and the size of the storage elements, respectively, of the recording medium (AT).

4. Reproduction and/or recording device according to claim 3, **characterized in that** said means for adapting the light spot size on the recording medium (AT) is formed as an objective lens (OL) configured as a double focus lens or multi focus lens, respectively.

5. Reproduction and/or recording device recording to anyone of claims 1 to 4, **characterized in that** the track guidance signal generating device (SSE) contains a circuit arrangement for track error signal generation (TE) which is connected to the track control loop via a change over switch (U) in accordance with the storage density type of the optical recording medium (AT).

6. Reproduction and/or recording to device according to anyone of claim 1 to 5, **characterized in that** the track guidance signal generating device (SSE) is changed over by a signal which corresponse to the storage density type being identified during the focus search procedure.

## Revendications

1. Appareil de restitution et/ou d'enregistrement pour des supports d'enregistrement optiques de densité de stockage différente, avec un dispositif photodétecteur, qui est relié à un dispositif de génération de signal de guidage de piste réversible en fonction du type de densité de stockage du support d'enregistrement optique, et où, au dispositif de photodétecteur est raccordé un appareil de génération de signal de guidage de piste (SSE), qui génère pour le guidage de piste d'un support d'enregistrement optique (AT) de faible densité de stockage un signal d'erreur de piste (TE) selon l'équation TE = (E1+E2) - (F1+F2) avec un système à trois faisceaux qui utilise un faisceau principal pour la lecture de données et deux faisceaux auxiliaires pour le guidage ultérieur de la piste, **caractérisé en ce que**, pour des supports d'enregistrement (AT) de densité de stockage supérieure, un signal d'erreur de piste (TE) est mis à disposition selon l'équation TE = (A+B) - (C+D) - k* ((E1+F1) - (E2+F2)) avec un système Differential-Push-Pull, qui est constitué par des surfaces partielles de détecteurs de faisceau auxiliaire, dont les signaux pour la compensation du décalage sont d'abord ajoutés et ensuite soustraits, E1, E2 ou F1 et F2 étant les surfaces partielles des deux détecteurs de faisceau auxiliaire et A, B, C et D les surfaces partielles d'un détecteur de faisceau principal à quatre quadrants, et K étant un facteur de correction.

2. Appareil de restitution et/ou d'enregistrement selon la revendication 1, **caractérisé en ce que** des différences d'intensité apparaissant dans le dispositif photodétecteur entre les signaux, qui sont générés par des détecteurs de faisceau auxiliaire (E1, E2 ou F1, F2) et par le détecteur à quatre quadrants (A, B, C, D), sont corrigées avec le facteur de correction k réglé dans le dispositif de génération de signal de guidage de piste (SSE).

3. Appareil de restitution et/ou d'enregistrement selon la revendication 1, **caractérisé en ce qu'**il est prévu un moyen pour l'adaptation de la grandeur du point lumineux sur le support d'enregistrement (AT) en fonction de la densité de stockage ou de la grandeur des éléments de stockage du support d'enregistrement (AT).

4. Appareil de restitution et/ou d'enregistrement selon la revendication 3, **caractérisé en ce que** le moyen pour l'adaptation de la grandeur du point lumineux sur le support d'enregistrement (AT) est une lentille d'objectif (OL) conçue comme une lentille à double foyer ou une lentille à plusieurs foyers.

5. Appareil de restitution et/ou d'enregistrement selon l'une quelconque des revendications 1 à 4, **caractérisé en ce que** l'appareil de génération de signal de guidage de piste (SSE) est un agencement de montage pour la génération de signal d'erreur de piste (TE), qui est relié au circuit de réglage de piste au moyen d'un inverseur (U) en fonction du type de densité de stockage du support d'enregistrement optique (AT).

6. Appareil de restitution et/ou d'enregistrement selon l'une quelconque des revendications 1 à 5, **caractérisé en ce que** l'appareil de génération de signal de guidage de piste (SSE) est inversé avec un signal correspondant au type de densité de stockage, qui est déterminé pendant l'opération de recherche de foyer.
